# EUROPEAN PATENT APPLICATION

(11) **EP 3 481 038 A1**
(43) Date of publication of application: **08.05.2019**
(21) Application number: 17200412.9
(22) Date of filing: 07.11.2017
(51) Int. Cl.: H04M 3/523

(54) **COMPUTER-IMPLEMENTED METHOD OF OPERATING A CONTACT CENTER**

(71) Applicant: virtualQ GmbH, 70193 Stuttgart (DE)
(72) Inventor: Kühnapfel, Jens, 70193 Stuttgart (DE); Kühnapfel, Ulf, 70193 Stuttgart (DE); Liebisch, Niels, 70569 Stuttgart (DE)
(74) Representative: Meyer zu Bexten, Elmar

(57) **Abstract**

**Problem**

State-of-the-art inbound contact centers use an automatic call distributor (ACD) and virtual queueing system to distribute incoming calls. Generic systems of these types hold calls in an unprioritized, "first-in-first-out" (FIFO) queue until contact center agents become available to take them, resulting in a purely reactive - and essentially random - schedule of customer contacts.

Solution

The problem is solved by scheduling the caller's time slot with an agent as per a selectable, preferably adjustable algorithm.

## Description

### Technical Field

The invention relates to the process and products as per the first portion of the independent claims.

### Background Art

In customer relationship management, a contact center is generally defined as a coordinated system of people, processes, technologies, and strategies that provides access to information, resources, and expertise through appropriate channels of communication, enabling interactions that create value for the customer and organization. An optional virtual queue provides callers to the contact center with a convenient alternative to waiting on hold when no agents are available to handle inbound call demand.

EP 3107275 A (VIRTUALQ UG (HAFTUNGSBESCHRÄNKT)) 21.12.2016 discloses a state-of-the-art virtual queuing system comprising various interfaces. Such system communicates to callers via one of various channels - such as a telephonic announcement while placed on hold, text message, web widget, smartphone app, or voice app - when an agent becomes available to handle their inbound calls. When her assigned time slot arrives, the software then calls the respective customer using one among different methods.

Advanced call center technologies to improve agent productivity and customer satisfaction include speech recognition software to allow computers to handle first-level customer support, text mining, and natural language processing to allow better customer handling, agent training by automatic mining of best practices from past interactions, as well as support automation. Pertinent technologies have been studied, e. g., in **SUHM,** Bernhard, et al. A comparative study of speech in the call center: natural language call routing vs. touch-tone menus. Proceedings of the SIGCHI conference on Human Factors in Computing Systems. April, 2002, p.283-290.

### Summary of invention

The invention as claimed is hereinafter disclosed in such a way that the technical problem with which it deals can be appreciated and the solution can be understood.

### Technical Problem

State-of-the-art inbound contact centers use an automatic call distributor (ACD) and virtual queueing system to distribute incoming calls. Generic systems of these types hold calls in an unprioritized, "first-in-first-out" (FIFO) queue until contact center agents become available to take them, resulting in a purely reactive - and essentially random - schedule of customer contacts.

### Solution to Problem

The problem is solved as per the characterizing portion of the independent claims.

### Advantageous effect of invention

An embodiment of the invention allows contact center management to proactively control how time slots are assigned to callers.

### Description of embodiments

In a contact center operated as per the invention, various algorithms can be used to assign time slots to callers. The available algorithms may be selected and adjusted via a management dashboard of the virtual queueing system. Specifically, the options include dynamic algorithms that react to call volume, peak, and current situation in the service center in terms of historical data, number of service agents available, date, and time. An algorithm of this type recognizes patterns and times the actual customer contacts such that service quality and workforce management may be improved. This way, the algorithm adapts to the peak situation to optimize utilization and availability in the service center.

To this end, the dynamic algorithms available are trained and optimized using real-time and historical metrics, pattern recognition, deep learning, and neural networks. Herein, different target criteria can be selected, for example, wait time of the caller during her time slot until she is connected to the employee or agent. Further target parameters may relate to the smoothing of the call volume with respect to intra-day peaks, total waiting time, workload of the employees, et cetera.

During a preliminary training phase, the algorithms or neural networks are trained while concrete outputs can be specified in the context of supervised learning or optimized in the context of unsupervised learning. Each service center may perform this training individually or use a neural network based on existing data aggregated across several service centers. In an ensuing test phase of the neural network, the extent to which the network has learned is examined. For this purpose, input parameters either from live, historical, or fictitious data may be entered to calculate the corresponding output.

Based on historical data on peak workloads, patterns and trends are analyzed. If certain rudimentary patterns are recognized by the live system or certain system parameters are present, the algorithms can adapt autonomously or proposals for optimization may be offered automatically. The entirety of aggregated data is compared to recognize which waiting algorithm affects key performance indicators (KPIs) of the service center in what way.

As mentioned, service center management may specify the target criteria for the queueing algorithm, for example, service level, accessibility, maximum time spent in the virtual queue, or rate of simultaneous calls reaching the service center. These criteria may be correlated with other parameters such as number of active agents, maximum incoming call rate of the service center, or optimized industry-dependent setups. Based on these parameters, the system can identify which algorithm best meets the target criteria.

With the data collected, predictions about possible future call volumes and peak profiles may be made. Preferably along with suggestions for improvement, these predictions are displayed to the employees on a management dashboard. Further, the collected data may serve as a basis for staff planning suggestions to meet the service center's target criteria. Existing personnel deployment planning systems can also be connected via suitable interfaces.

An advanced embodiment of the invention offers the possibility of incorporating natural language processing (NLP) and especially natural language understanding (NLU) into the system. In a pertinent use case, the caller would voice her problem or concern in natural language on any channel (telephony, web service, widget, or apps). This request is then assigned corresponding parameters such that that the expected response time of the agent or the complexity of the question can be considered in the optimization. Concerns expected to be resolved faster may be brought forward to reduce overall waiting time.

A variant of the invention also offers the possibility of automatically answering a request. To decide whether to answer the request automatically or put the respective caller through to an agent, agent workload can be considered by the algorithms and factored into the system's decision.

Additional internal and external data sources may be used to optimize the waiting queue. These may provide information about the browsing or app usage history of the user, relate to an interactive voice response (IVR), or be transmitted by Internet-of-things (IOT) devices. Yet further external data such as weather or industry data can be integrated via additional interfaces.

### Industrial applicability

The invention is applicable, among others, throughout the contact center industry.

### Citation list

The following documents are cited hereinbefore.

### Patent literature

EP 3107275 A (VIRTUALQ UG (HAFTUNGSBESCHRÄNKT)) 21.12.2016

### Non-paten t literature

**SUHM,** Bernhard, et al. A comparative study of speech in the call center: natural language call routing vs. touch-tone menus. Proceedings of the SIGCHI conference on Human Factors in Computing Systems. April, 2002, p.283-290.

## Claims

1. Computer-implemented method of operating a contact center, comprising assigning a time slot to a caller,
**characterized in that**
the time slot is scheduled as per a selectable, preferably adjustable algorithm.

2. Method as per Claim 1 wherein
the time slot is scheduled depending on peak and current workload of the contact center, such as call volume, previous performance, number of service agents available, date, or time.

3. Method as per Claim 2 wherein
the algorithm recognizes patterns in the workload and, depending on the patterns, shifts the time slot such as to spread the workload as per a desired temporal distribution.

4. Method as per Claim 2 or Claim 3 wherein
the algorithm is trained and preferably optimized based on real-time and historical characteristics.

5. Method as per Claim 4 wherein
the training is performed by a preferably deep-learning artificial neural network.

6. Method as per Claim 4 or Claim 5 wherein
the algorithm is selected or its training supervised to attain a pre-set goal such as minimizing wait time of the caller during the time slot, minimizing overall wait time of the caller, maximizing availability, reaching a certain service level, smoothing the workload, or reducing slack among agents of the contact center.

7. Method as per Claim 4 or Claim 5 wherein
the training is unsupervised.

8. Method as per any of Claim 4 through Claim 7 wherein
the training is based on a dataset aggregated within the contact center or across multiple contact centers.

9. Method as per Claim 8 wherein
a forecast, such as on future call volume and peak times of the contact center, is issued based on the dataset.

10. Method as per Claim 9 wherein
the forecast, preferably along with suggestions for staff planning or improvement of the algorithm, is displayed on a management dashboard of the contact center.

11. Method as per any of the preceding claims wherein
a concern voiced in natural language by the caller is processed and
the scheduling is optimized based on a subject matter of the concern.

12. Method as per any of the preceding claims wherein
the scheduling is optimized based on further internal or external data sources such as an Internet of things or browsing history of the caller.

13. Data processing apparatus having means for carrying out the method of any of the preceding claims.

14. Computer program comprising instructions which, when the program is executed by a computer, cause the computer to carry out the method of any of Claim 1 to Claim 12.

15. Computer-readable medium having stored thereon the computer program of Claim 14.
